(19) Europäisches Patentamt European Patent Office Office européen des brevets

(11) **EP 4 632 661 A1**

(12) **EUROPEAN PATENT APPLICATION**
published in accordance with Art. 153(4) EPC

(43) Date of publication:
**15.10.2025 Bulletin 2025/42**

(21) Application number: **24860171.8**

(22) Date of filing: **16.07.2024**

(51) International Patent Classification (IPC):
*G06Q 50/06* (2024.01)      *G06Q 50/26* (2024.01)
*H02J 3/14* (2006.01)        *H02J 3/00* (2006.01)

(52) Cooperative Patent Classification (CPC):
**G06Q 50/06; G06Q 50/26; H02J 3/00; H02J 3/14**

(86) International application number:
**PCT/KR2024/010137**

(87) International publication number:
**WO 2025/048250 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.08.2023 KR 20230113266**

(71) Applicant: **LG Energy Solution, Ltd.
Seoul 07335 (KR)**

(72) Inventor: **KIM, Daesoo
Daejeon 34122 (KR)**

(74) Representative: **BCKIP Part mbB
MK1
Landsbergerstraße 98, 3.Stock
80339 München (DE)**

(54) **DEVICE FOR OPERATING VIRTUAL POWER PLANT AND METHOD FOR OPERATING VIRTUAL POWER PLANT**

(57)      A Virtual Power Plant (VPP) operating method by a VPP operating device associated with a plurality of Demand Response (DR) resources includes: allocating a power reduction amount to each of the DR resources in response to a power reduction request; providing, when a request to sell at least a portion of the allocated power reduction amount is received from a first DR resource among the DR resources, information about power for sale to the remaining DR resources; and calculating, when one or more second DR resources that purchased the power for sale are decided, based on a result of the sale, a power transaction price that includes at least one of a penalty price for the first DR resource and a compensation price for the second DR resource.

[FIGURE 4]

```
                  ┌───────┐
                  │ start │
                  └───┬───┘
                      │
         ┌────────────▼────────────┐
         │ receive power reduction │  S410
         │        request          │
         └────────────┬────────────┘
                      │
   ┌──────────────────▼──────────────────┐
   │ allocate power reduction amount for  │  S420
   │        each of DR resources          │
   └──────────────────┬──────────────────┘
                      │
      ┌───────────────▼───────────────┐
      │ receive request to sell from   │  S430
      │       first DR resource        │
      └───────────────┬───────────────┘
                      │
┌─────────────────────▼─────────────────────┐
│ provide information about power for sale to │  S440
│          remaining DR resources             │
└─────────────────────┬─────────────────────┘
                      │
        S450      ┌───▼────┐         NO
              ╱───┤Complete├───╲ ────────┐
              ╲   │ Power  │   ╱         │
              ╱───┤transac.│───╲         │
                  └───┬────┘             │
                    YES                  │
      ┌───────────────▼───────────────┐  │
      │ calculate power transaction    │  S460
      │           price                │
      └───────────────┬───────────────┘
                      │
                  ┌───▼───┐
                  │  end  │
                  └───────┘
```

EP 4 632 661 A1

**Description**

[Technical Field]

This application claims priority to and the benefit of Korean Patent Application No. 10-2023-0113266 filed in the Korean Intellectual Property Office on August 29, 2023, the entire contents of which are incorporated herein by reference.

The present invention relates to a virtual power plant operating device and a virtual power plant operating method, and more particularly to a virtual power plant operating device associated with a plurality of Demand Response (DR) resources and a virtual power plant operating method thereby.

[Background Art]

Distributed Energy Resource (DER) refers to power resources that are associated with to the grid and may provide power or support power when power peak occurs. Examples of distributed energy resources include distributed power sources, Energy Storage Systems (ESS), and demand resources.

Distributed power sources and small-scale ESS have been spreading, but they are scattered in various facilities, such as houses and buildings, which limits their integrated operation. To solve this problem, a Virtual Power Plant (VPP) has been proposed that integrates and operates various distributed resources as a single power plant by using ICT technology. Virtual power plants may integrate and operate distributed resources that may only be managed individually, and may improve the accuracy of power generation prediction through aggregated prediction for each distributed resource, thereby improving the stability of the power grid.

Virtual power plants may be categorized as a supply type, a demand type, and a converged type, depending on a resource recruitment type. Among them, demand-type virtual power plants provide services to stabilize the power grid by performing power reduction during power peaks by using recruited demand response resources. Small-scale facilities, such as houses, buildings, and factories, mainly participate in virtual power plants as demand response resources. When a demand response resource reduces its power usage according to the request of the virtual power plant or a VPP provider system, the participant may be compensated by receiving a settlement payment equivalent to the power reduction amount.

In response to a request from the grid to reduce power, the virtual power plant needs to allocate a power reduction amount to each of the associated demand response resources, and each demand response resource needs to fulfill demand response equal to the allocated power reduction amount. When a demand response resource fails to reduce some of the allocated amount of power, the demand response resource pays a certain penalty cost to the virtual power plant.

According to the operation method of the typical virtual power plant, even when the demand response resource cannot fulfill the demand response due to ESS failure or insufficient storage power, the penalty cost is be imposed to the corresponding demand response resource, which may increase the outflow of existing demand response resources and decrease the inflow of new demand response resources. Therefore, appropriate virtual power plant operation technologies are required to solve the problems.

[Detailed Description of the Invention]

[Technical Problem]

An object of the present invention to solve the foregoing problems is to provide a virtual power plant operating device associated with a plurality of demand response resources.

Another object of the present invention to solve the foregoing problems is to provide a virtual power plant operating method by the virtual power plant operating device.

[Technical Solution]

In order to achieve the foregoing object, an exemplary embodiment of the present invention provides a Virtual Power Plant (VPP) operating device configured in a VPP system associated with a plurality of Demand Response (DR) resources, the VPP operating device including: at least one processor; and a memory for storing at least one instruction executed via the at least one processor.

Herein, the at least one instruction may include: an instruction to allocate a power reduction amount to each of the DR resources in response to a power reduction request; an instruction to, when a request to sell at least a portion of the allocated power reduction amount is received from a first DR resource among the DR resources, provide information about power for sale to the remaining DR resources; and an instruction to, when one or more second DR resources that purchased the power for sale are decided, calculate, based on a result of the sale, a power transaction price that includes at least one of a penalty price for the first DR resource and a compensation price for the second DR resource.

The instruction to provide the information about the power for sale to the remaining DR resources may include an instruction to terminate a sale process and deciding the second DR resource when a predetermined time has elapsed, or when all of a power amount for sale has been sold.

The instruction to calculate the power transaction price may include: an instruction to calculate a Supply-Demand Ratio (SDR) based on a power amount for sale and a total power amount purchased by the second DR resource; and an instruction to calculate one or more of a penalty price for the first DR resource and a compensation price for the second DR resource based on the SDR.

The penalty price for the first DR resource may be calculated at a lower price as the SDR is higher.

The compensation price for the second DR resource may be calculated at a higher price as the SDR is lower.

The at least one instruction may further include: an instruction to pay a compensation cost according to a predefined general compensation price when the DR resource fulfills a demand response and reduces a power amount allocated to the DR resource itself; and an instruction to impose a penalty cost according to a general penalty price predefined at a price higher than the general compensation price when the DR resource fails to reduce at least a portion of the power amount allocated to the DR resource itself.

The penalty price for the first DR resource may be calculated at a price equal to or lower than the general penalty price. Herein, the penalty price for the first DR resource may be calculated at a price closer to the general compensation price as an SDR calculated based on a power amount for sale and a total power amount purchased is higher.

The compensation price for the second DR resource may be calculated at a price equal to or higher than the general compensation price. Herein, the compensation price for the second DR resource may be calculated at a price closer to the general penalty price as an SDR calculated based on a power amount for sale and a total power amount purchased is lower.

The at least one instruction may further include: an instruction to, when the second DR resource fulfills a demand response for a power amount purchased from the first DR resource, pay a compensation cost according to the compensation price to the second DR resource; and an instruction to impose a penalty cost according to the penalty price on the first DR resource.

In order to achieve the foregoing object, another exemplary embodiment of the present invention provides a Virtual Power Plant (VPP) operating method by a VPP operating device associated with a plurality of Demand Response (DR) resources, the VPP operating method including: allocating a power reduction amount to each of the DR resources in response to a power reduction request; providing, when a request to sell at least a portion of the allocated power reduction amount is received from a first DR resource among the DR resources, information about power for sale to the remaining DR resources; and calculating, when one or more second DR resources that purchased the power for sale are decided, based on a result of the sale, a power transaction price that includes at least one of a penalty price for the first DR resource and a compensation price for the second DR resource.

The providing of the information about the power for sale to the remaining DR resources may include terminating a sale process and deciding the second DR resource when a predetermined time has elapsed, or when all of a power amount for sale has been sold.

The calculating of the power transaction price may include: calculating a Supply-Demand Ratio (SDR) based on a power amount for sale and a total power amount purchased by the second DR resource; and calculating one or more of a penalty price for the first DR resource and a compensation price for the second DR resource based on the SDR.

The penalty price for the first DR resource may be calculated at a lower price as the SDR is higher.

The compensation price for the second DR resource may be calculated at a higher price as the SDR is lower.

The VPP operating method may further include: paying a compensation cost according to a predefined general compensation price when the DR resource fulfills a demand response and reduces a power amount allocated to the DR resource itself; and imposing a penalty cost according to a general penalty price predefined at a price higher than the general compensation price when the DR resource fails to reduce at least a portion of the power amount allocated to the DR resource itself.

The penalty price for the first DR resource may be calculated at a price equal to or lower than the general penalty price. Herein, the penalty price for the first DR resource may be calculated at a price closer to the general compensation price as an SDR calculated based on a power amount for sale and a total power amount purchased is higher.

The compensation price for the second DR resource may be calculated at a price equal to or higher than the general compensation price. Herein, the compensation price for the second DR resource may be calculated at a price closer to the general penalty price as an SDR calculated based on a power amount for sale and a total power amount purchased is lower.

The VPP operating method may further include: when the second DR resource fulfills a demand response for a power amount purchased from the first DR resource, paying a compensation cost according to the compensation price to the second DR resource; and imposing a penalty cost according to the penalty price on the first DR resource.

[Advantageous Effects]

According to the exemplary embodiments of the present invention, it is possible to minimize non-fulfillment of a demand response for a grid-side power reduction demand by supporting demand response resources to trade their allocated power reduction amounts.

Further, according to the exemplary embodiments of the present invention, it is possible to improve the cost satisfaction of users participating in a demand response by minimizing the penalty price for non-fulfillment of the demand response and paying an additional compensation price for additional fulfillment of the demand response.

[Brief Description of Drawings]

FIG. 1 is a block diagram for illustrating a demand response resource according to the present invention.

FIG. 2 is a block diagram illustrating an example implementation of a demand response resource according to an exemplary embodiment of the present invention.

FIG. 3 is a block diagram for illustrating a virtual power plant operating device according to an exemplary embodiment of the present invention.

FIG. 4 is an operation flow diagram illustrating a virtual power plant operating method according to an exemplary embodiment of the present invention.

FIG. 5 is a block diagram illustrating an example of the virtual power plant operating method according to the exemplary embodiment of the present invention.

FIG. 6 is a block diagram of the virtual power plant operating device according to the exemplary embodiment of the present invention.

10: Energy storage system
20: Load
30: Power grid
40: VPP operating device
100: VPP operating device
200: Demand response resource

[Best Mode]

The invention is subject to various modifications and may have many exemplary embodiments, and certain exemplary embodiments are illustrated in the drawings and described in more detail in the detailed description. However, it is not intended to limit the present invention to the specific exemplary embodiments, and it will be appreciated that the present invention includes all modifications, equivalences, or substitutions included in the spirit and the technical scope of the present invention. In describing each drawing, like reference numerals in the drawings refer to the same or similar functions.

Terms, such as first, second, A, and B, are used for describing various constituent elements, but the constituent elements are not limited by the terms. The terms are used only to discriminate one constituent element from another constituent element. For example, without departing from the scope of the invention, a first constituent element may be named as a second constituent element, and similarly a second constituent element may be named as a first constituent element. A term "and/or" includes a combination of multiple relevant described items or any one of the multiple relevant described items.

It should be understood that when one constituent element referred to as being "coupled to" or "connected to" another constituent element, one constituent element may be directly coupled to or connected to the other constituent element, but intervening elements may also be present. By contrast, when one constituent element is referred to as being "directly coupled to" or "directly connected to" another constituent element, it should be understood that there are no intervening elements.

Terms used in the present application are used only to describe specific exemplary embodiments, and are not intended to limit the present invention. Singular expressions used herein include plurals expressions unless they have definitely opposite meanings in the context. In the present application, it will be appreciated that terms "including" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance.

All terms used herein including technical or scientific terms have the same meanings as meanings which are generally understood by those skilled in the art unless they are differently defined. Terms defined in generally used dictionary shall be construed as having meanings matching those in the context of a related art, and shall not be construed in ideal or excessively formal meanings unless they are clearly defined in the present application.

Some of the terms used in the present specification are defined below.

State of Charge (SOC) is a current state of charge of a battery expressed as a percentage (%), and State of Health (SOH) is a current state of degradation of a battery expressed as a percentage (%).

A battery rack is the smallest single-structured system of modules or pack units set by a battery manufacturing company, connected in series or parallel, that may be monitored and controlled by a BMS, and may consist of multiple battery packs or battery modules and one BPU or protective device.

A battery bank may refer to a larger group of battery rack systems that are configured by connecting multiple racks in parallel. Monitoring and controlling of the rack BMS (RBMS) at the unit of battery rack may be performed through a BMS in the battery bank level.

A Battery System Controller (BSC) is a device that performs top-level control of a battery system including a bank-level battery system, and is also used as a control device in a battery system with multiple bank level structures.

A virtual power plant system refers to the collection of hardware and software for the operation of a Virtual Power Plant (VPP). The VPP may be included and implemented on a single physical device, or may be implemented while being distributed across multiple physical devices.

A Demand Response Resource means a facility associated with a VPP system and controls power resources in response to a demand response request from the VPP system. The demand response resource may be a variety of facilities, such as a house, building, and factory, but the scope of the invention is not limited to those entities.

A Demand Response (DR) means the regulation of grid power usage by controlling power resources to meet a demand response request. A demand response resource associated with a demand-type virtual power plant may fulfill a demand response by reducing the grid power usage by a power reduction amount allocated to the demand response resource.

A demand response request refers to a request for control of a power resource or a request for a change in the power usage to a demand response resource. Here, the demand response request may include at least one of a demand response time period and a demand response power amount (e.g., power reduction amount).

Hereinafter, an exemplary embodiment according to the present invention will be described in detail with reference to the accompanying drawings.

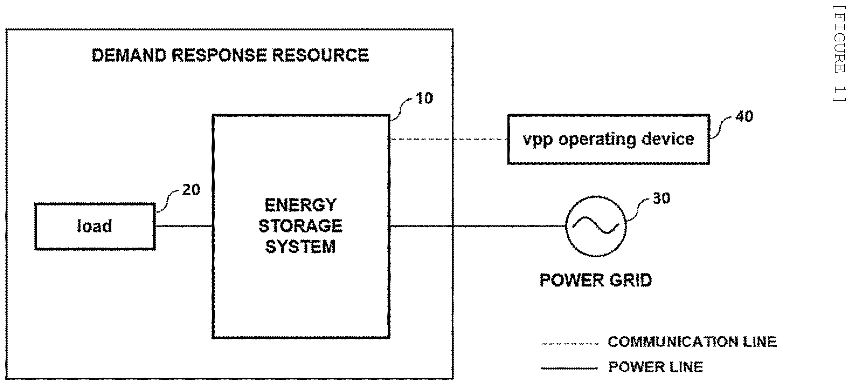

FIG. 1 is a block diagram for illustrating a demand response resource according to the present invention.

A demand response resource according to the present invention may include an energy storage system 10 and a load 20.

The energy storage system 10 may receive power from a power grid 30 and store the received grid power internally.

The load 20 may be electrically connected to the energy storage system 10 and the power grid 30, and may receive power from one or more of the energy storage system 10 and the power grid 30.

The energy storage system 10 may be connected with a VPP operating device 40 via a network and transceive data with the VPP operating device 40. Here, the energy storage system 10 may be connected to the VPP operating device 40 via a wired or wireless network.

The energy storage system 10 may receive information about a demand response request from the VPP operating device 40. Here, the information about the demand response request may include a demand response time period and a demand response power amount (e.g., power reduction amount).

The VPP operating device 40 may be configured to be included in the VPP system. The VPP operating device 40 may be managed by an intermediary operator that recruits participants and demand response resources for the VPP service and provides the VPP service. The VPP operating device 40 may generate and transmit Demand Response (DR) request information to the energy storage system 10 configured on the demand response resource in the event of a power peak on the power grid.

The energy storage system 10 may monitor the state of the internal power resources and control the charging and discharging operation of the internally configured batteries according to a pre-established operating schedule. Here, when the DR request information is received from the VPP operating device 40, the energy storage system 10 may adjust the operating schedule of the battery in response to the demand response request. For example, when a request to reduce 10 kWh of power is received from the VPP operating device 40, the energy storage system 10 may control the battery to discharge 10 kWh to fulfill the demand response.

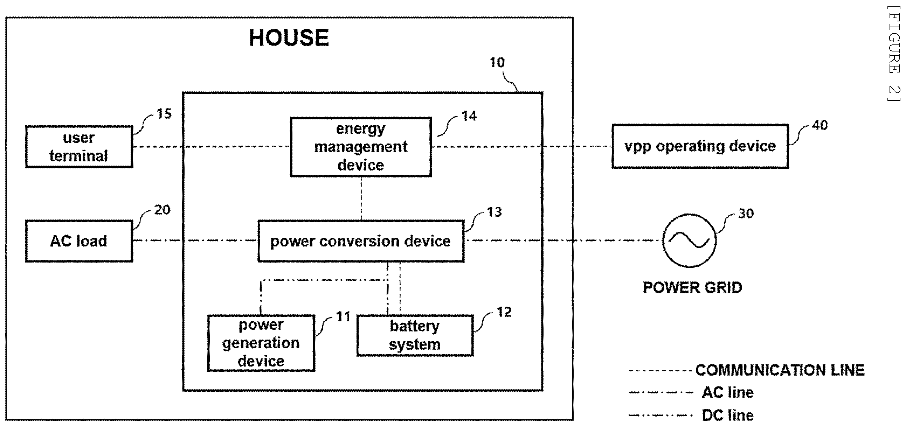

FIG. 2 is a block diagram illustrating an example implementation of a demand response resource according to the exemplary embodiment of the present invention.

A demand response resource according to the exemplary embodiment of the present invention may correspond to a house including the energy storage system 10. The energy storage system 10 may include a power generation device 11 that generates power; a battery system 12 that stores power; an energy management device 14 that manages and controls the components of the energy storage system; and a power conversion device 13 that is connected with the power generation device 11, the battery system 12, and the power grid 30 to convert power.

The power generation device 11 is a device configured on a demand response resource to generate power, and may include at least one of photovoltaic, solar thermal, wind, and geothermal power generation devices. For example, the power generation device 11 may correspond to a photovoltaic (PV) system.

The battery system 12 may include one or more battery modules, battery packs, or battery racks. The battery system 12 may include a Battery Management System (BMS). The BMS may serve to monitor the current, voltage, and temperature of the battery, calculate a State Of Charge (SOC) based on the monitoring results, and control charging and discharging.

The power conversion device 13 may control the power output from the power generation device 11, the charge and discharge power of the battery system 12, and the power supplied to the load 20. Here, the power conversion device 13 may control the charging and discharging operation of the battery system 12 according to an operating schedule established by the energy management device 14. The power conversion device 13 may include an AC/DC inverter that converts a DC output of the power generation device 11 and the battery system 12 to an AC output and supplies the converted AC power to the load 20.

The energy management device 14 may collect state information about the power generation device 11, the battery system 12, the power conversion device 13, the load 20, and the power grid 30 to monitor each configuration. Here, the state information may include at least one of a grid power supply amount, a power production amount, a power consumption amount, an operational state of the battery system 12, and a state of charge of the battery. The energy management device 14 may be connected with sensors capable of sensing specific state information or with a management device (e.g., a BMS) of a specific power resource to collect state information about the power resource.

The energy management device 14 may correspond to, or be implemented to be included in, a top-level control device of the ESS. For example, the energy management device 14 may correspond to, or be implemented to be included in, a Home Energy Management System (HEMS), which is the top-level control system within a residential ESS.

The energy management device 14 may be connected with the user terminal 15 via a network to transceive data to each other.

The user terminal 15 may be a computing device managed by a user managing a demand response resource. Here, the user terminal 15 may receive and display information about the state and operation of the ESS from the energy management device 14. In addition, the user terminal 15 may receive user-selected information about the operation of the ESS from the user and transmit the user-selected information to the energy management device 14. Further, the user terminal 15 may be connected via a network to the VPP operating device 40, and may transmit the user-selected information directly to the VPP operating device 40.

The energy storage system 10 may be implemented as a DC coupled ESS, as illustrated in FIG. 2, where the power generation device 11 and the battery system 12 are coupled to a DC line. The energy storage system 10 illustrated in FIG. 2 is an example for clarification of the present invention, and the scope of the present invention is not limited to the detailed structure of the ESS.

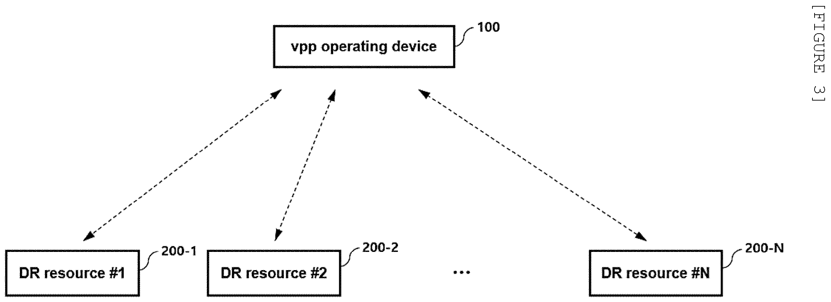

FIG. 3 is a block diagram for illustrating a virtual power plant operating device according to the exemplary embodiment of the present invention.

The VPP operating device 100 is associated with a plurality of DR resources 200-1 to 200-N. Here, the VPP operating device 100 may be connected via a network with a user terminal or an energy management device of each of the DR resources, and transceive data to each other.

The VPP operating device 100 may generate and transmit DR request information to the DR resources when a power peak occurs in the power grid. The DR request information transmitted to each of the DR resources may include the power reduction amount allocated to each DR resource.

When a DR resource fulfills a demand response and reduces the power amount allocated to the DR resource itself, the VPP operating device 100 may pay a compensation cost to the user of the DR resource. Here, the VPP operating device 100 may calculate a compensation cost based on the power reduction amount by the DR resource and a predefined general compensation price, and may pay the calculated compensation cost to a user account of the DR resource.

For example, when DR resource #1 fulfills power reduction by 20 kWh, and the general compensation price is defined as 100 KRW/kWh, the VPP operating device 100 may pay the user of DR resource #1 a compensation cost of 2000 KRW (20 * 100).

When the DR resource fails to reduce at least portion of the power amount allocated to the DR resource itself, the VPP operating device 100 may impose a penalty cost on the user of the DR resource. Here, the VPP operating device 100 may calculate a penalty cost based on the demand response non-fulfillment power amount of the DR resource and a predefined general penalty price, and may receive the calculated penalty cost from the user account of the DR resource. In the exemplary embodiment, the general penalty price may be defined as a price that is higher than the general compensation price.

For example, when DR resource #1 fails to reduce 15 kWh power out of the allocated 20 kWh, and the general penalty price is defined as 150 KRW/kWh, the VPP operating device 100 may impose a penalty cost of 2250 KRW (15 * 150) to the user of DR resource #1. Here, since DR resource #1 has fulfilled the reduction of 5 kWh power, the final penalty cost may be determined to be 1750 KRW that is obtained by reducing a compensation cost of 500 KRW (5 * 100) from 2250 KRW.

The VPP operating device 100 may support DR resources to trade their allocated power reduction amounts. That is, when a specific DR resource fails to fulfill the reduction of its allocated power amount due to a failure of the ESS or a lack of stored power, the VPP operating device 100 may support the DR resource to sell the power amount allocated to another DR resource.

Herein, the VPP operating device 100 may pay a separate compensation cost, discrete from the general compensation cost, to a DR resource that purchases allocated power and fulfills an additional demand response. Additionally, the VPP operating device 100 may impose a separate penalty cost, discrete from the general penalty cost, on a DR resource that sells the allocated power and fails to fulfill at least a portion of the demand response.

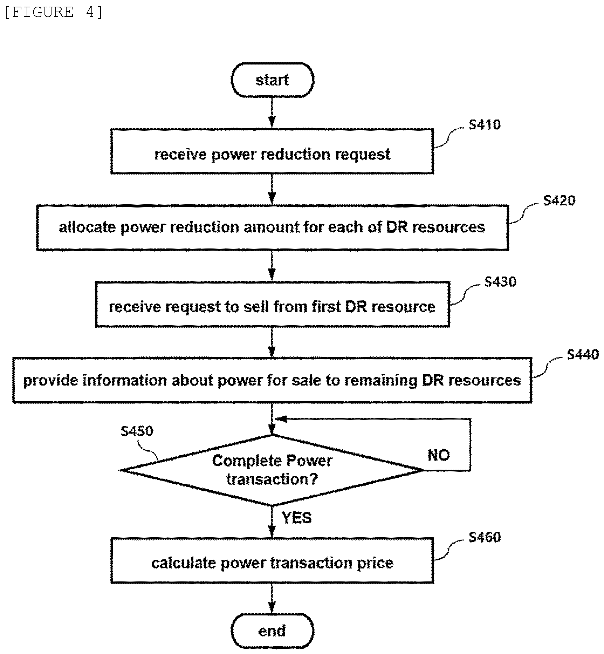

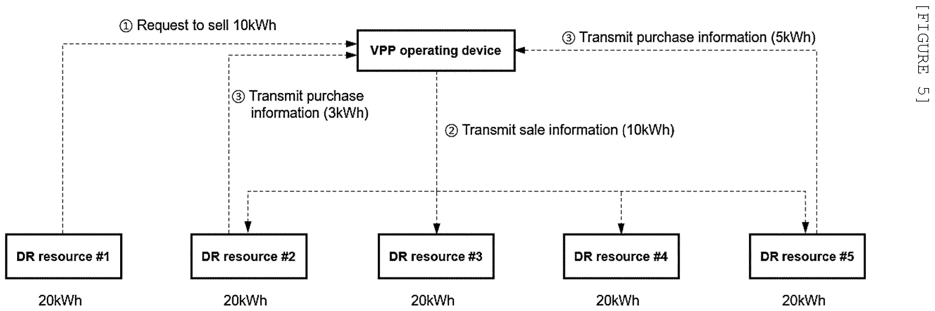

FIG. 4 is an operation flow diagram illustrating a virtual power plant operating method according to an exemplary embodiment of the present invention, and FIG. 5 is a block diagram illustrating an example of the virtual power plant operating method according to the exemplary embodiment of the present invention.

The virtual power plant operating method according to the exemplary embodiment of the present invention may be performed by a VPP operating device located within the VPP system.

The VPP operating device may receive a power reduction request from an external device (S410). Here, the power reduction request may be received from a device monitoring the power grid and may include a total amount of power reduction required by the power grid.

The VPP operating device may, in response to the received power reduction request, allocate a power reduction amount for each of the DR resources (S420). For example, when a total of 100 kWh of power reduction is required, the VPP operating device may assign a power reduction amount of 20 kWh to each of the five DR resources, as illustrated in FIG. 5.

The VPP operating device may transmit information about the allocated power to each of the DR resources. Here, the allocated power information may include a demand response power amount (power reduction amount), and a demand response time period.

The VPP operating device may receive a request to sell at least a portion of the allocated power reduction amount from a specific DR resource (hereinafter, a first DR resource) (S430) among the DR resources. For example, as illustrated in FIG. 5, DR resource #1 (the first DR resource) may request the VPP operating device to sell 10 kWh out of the allocated 20 kWh power amount. Alternatively, the first DR resource may request to sell the entire allocated power amount (20 kWh), unlike illustrated in FIG. 5.

The VPP operating device may provide information about the power for sale to the remaining DR resources (S440). Here, the information about the power for sale may include the amount of additional demand response power (a power amount to be additionally reduced), and the demand response time period. For example, as illustrated in FIG. 5, the VPP operating device may transmit the power amount for sale (10 kWh) to the remaining DR resources (DR resource #2 to DR resource #5), except DR resource #1 (the first DR resource), and request a response as to whether or not to purchase the power.

The power sale process (or power transaction process) may run for a predetermined time. At this point, the VPP operating device may terminate the sale process (or power transaction process) when the predetermined time has elapsed, or when all of the power amount for sale has been sold.

When the power transaction is completed (YES in S450), the VPP operating device may decide the one or more DR resources that purchased the power for sale (hereinafter, a second DR resource) and the amount of purchase power. For example, as illustrated in FIG. 5, when DR resource #2 purchases 3 kWh, DR resource #5 purchases 5 kWh, and the power transaction process is terminated after a set time has elapsed, the VPP operating device may decide DR resource #2 and DR resource #5 as second DR resources, and determine that the total power amount purchased is 8 kWh.

The VPP operating device may, based on the sales results, calculate a power transaction price (S460). Here, the power transaction price may include one or more of a penalty price for the first DR resource and a compensation price for the second DR resource.

The VPP operating device may calculate a penalty price for the first DR resource and a compensation price for the second DR resource based on one or more of the power amount for sale, the total power amount purchased, a general penalty price, and a general compensation price.

In the exemplary embodiment, the VPP operating device may calculate a penalty price for the first DR resource and a compensation price for the second DR resource based on a ratio of the total power amount purchased to the power amount for sale.

Specifically, the VPP operating device may calculate a supply-demand ratio (SDR) based on Equation 1 below, and may calculate a penalty price for the first DR resource and a compensation price for the second DR resource based on the calculated SDR.

[Equation 1]

$$SDR = \frac{\sum P_{buy}}{P_{sell}}$$

($P_{sell}$ is the power amount for sale by the first DR resource and $\sum P_{buy}$ is the total power amount purchased by the second DR resource)

Here, the penalty price for the first DR resource may be defined such that the higher the SDR calculated by Equation 1, the lower the price is calculated. That is, when the first DR resource has sold the allocated power amount through a power transaction according to the present invention, the penalty cost for non-fulfillment of the demand response may be imposed lower as the power amount purchased is higher.

Furthermore, the compensation price for the second DR resource may be defined such that as the SDR is lower, the higher price is calculated. That is, when the second DR resource has purchased the allocated power amount through the power transaction according to the present invention, the compensation cost for additional fulfillment of the demand response may be paid larger as the power amount purchased is lower.

In the exemplary embodiment, the penalty price for the first DR resource may be defined to be calculated at the general penalty price or less. Herein, the penalty price for the first DR resource may be defined to be calculated at a price closer to the general compensation price as the SDR is higher. For example, when the general penalty price is defined as 150 KRW/kWh and the general compensation price is defined as 100 KRW/kWh, the penalty price for the first DR resource may be calculated at a price of 150 KRW/kWh or less. Here, the penalty price for the first DR resource may converge to 100 KRW/kWh while lowering as the SDR is higher (i.e., as the total power amount purchased is larger). Accordingly, when it is impossible to reduce a portion of the allocated power amount, the user of the DR resource may sell the allocated power to another user through the power transaction process according to the present invention, thereby partially reducing the penalty cost imposed.

The VPP operating device may calculate a penalty price for the first DR resource based on Equation 2 below.

[Equation 2]

$$\lambda_{sell} = \frac{\lambda_{pen} * \lambda_{grid}}{(\lambda_{pen} - \lambda_{grid}) * SDR + \lambda_{grid}}$$

($\lambda_{sell}$ is the penalty price for the first DR resource, $\lambda_{pen}$ is the general penalty price, and $\lambda_{grid}$ is the general compensation price)

According to Equation 2, when the general penalty price is defined as 150 KRW/kWh and the general compensation price is defined as 100 KRW/kWh, the penalty price for the first DR resource may be calculated as 150 KRW/kWh when SDR is 0. Also, when the SDR is 0.5, the penalty price for the first DR resource may be calculated as 120 KRW/kWh. Also, when the SDR is 0.8, the penalty price for the first DR resource may be calculated as 107.1 KRW/kWh. Also, when the SDR is 1, the penalty price for the first DR resource may be calculated as 100 KRW/kWh.

In the exemplary embodiment, the compensation price for the second DR resource may be defined to be calculated at the general compensation price or higher. Herein, the compensation price for the second DR resource may be defined to be calculated at a price closer to the general penalty price as the SDR is lower. For example, when the general penalty price is defined as 150 KRW/kWh and the general compensation price is defined as 100 KRW/kWh, the compensation price for the second DR resource may be calculated at a price of 100 KRW/kWh or more. Herein, the compensation price for the second DR resource is calculated at a higher price as the SDR is lower (i.e., as the total power amount purchased is less), and may converge to 150 KRW/kWh as the SDR is close to 0. Accordingly, the user of the DR resource may receive an additional compensation cost higher the general compensation cost by purchasing the allocated power from another user through the power transaction process according to the present invention, when it is possible to fulfill an additional demand response.

The VPP operating device may calculate a compensation price for the second DR resource based on above Equation 2 and Equation 3 below.

[Equation 3]

$$\lambda_{\text{buy}} = \lambda_{\text{sell}} * SDR + \lambda_{\text{pen}}(1 - SDR)$$

($\lambda_{\text{buy}}$ is the compensation price for the second DR resource)

According to Equations 2 and 3, when the general penalty price is defined as 150 KRW/kWh and the general compensation price is defined as 100 KRW/kWh, the compensation price for the second DR resource may be calculated as 149.3 KRW/kWh when SDR is 0.1. Also, when the SDR is 0.5, the compensation price for the second DR resource may be calculated as 135 KRW/kWh. Also, when the SDR is 0.8, the compensation price for the second DR resource may be calculated as 115.7 KRW/kWh. Also, when the SDR is 1, the compensation price for the second DR resource may be calculated as 100 KRW/kWh.

When the second DR resource fulfills the demand response for the power amount purchased from the first DR resource, the VPP operating device may calculate the compensation cost based on the compensation price calculated in S460 and pay the calculated compensation cost to the user of the second DR resource. In addition, the VPP operating device may calculate a penalty cost based on the penalty price calculated in S460 and impose the calculated penalty cost on the user of the first DR resource.

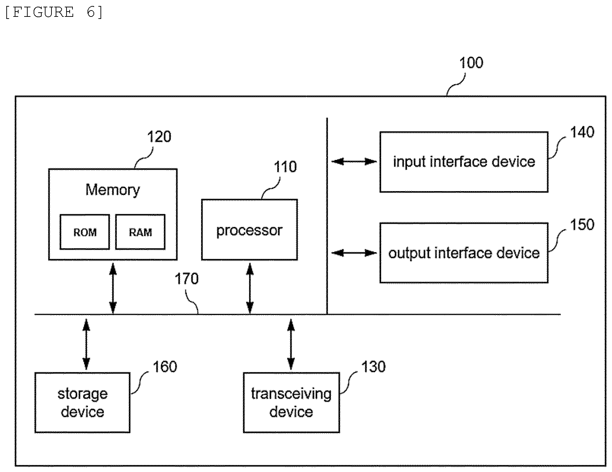

FIG. 6 is a block diagram of the VPP operating device according to the exemplary embodiment of the present invention.

The VPP operating device 100 according to the exemplary embodiments of the present invention may be located within a VPP system associated with a plurality of DR resources.

The VPP operating device 100 may include at least one processor 110, a memory 120 storing at least one instruction executable via the processor, and a transceiving device 130 performing communication via a network.

The at least one instruction may include, an instruction to allocate a power reduction amount to each of the DR resources in response to a power reduction request; an instruction to, when a request to sell at least a portion of the allocated power reduction amount is received from a first DR resource among the DR resources, provide information about power for sale to the remaining DR resources; and an instruction to, when one or more second DR resources that purchased the power for sale are decided, calculate, based on a result of the sale, a power transaction price that includes at least one of a penalty price for the first DR resource and a compensation price for the second DR resource.

The instruction to provide the information about the power for sale to the remaining DR resources may include an instruction to terminate a sale process and deciding the second DR resource when a predetermined time has elapsed, or when all of a power amount for sale has been sold.

The instruction to calculate the power transaction price may include an instruction to calculate a Supply-Demand Ratio (SDR) based on the power amount for sale and the total power amount purchased by the second DR resource; and an instruction to calculate one or more of a penalty price for the first DR resource and a compensation price for the second DR resource based on the SDR.

The penalty price for the first DR resource may be calculated at a lower price as the SDR is higher.

The compensation price for the second DR resource may be calculated at a higher price as the SDR is lower.

The at least one instruction may include: an instruction to pay a compensation cost according to a predefined general compensation price when the DR resource fulfills a demand response and reduces a power amount allocated to the DR resource itself; and an instruction to impose a penalty cost according to a general penalty price predefined at a price higher than the general compensation price when the DR resource fails to reduce at least a portion of the power amount allocated to the DR resource itself.

The penalty price for the first DR resource may be calculated at a price equal to or lower than the general penalty price. Herein, the penalty price for the first DR resource may be calculated at a price closer to the general compensation price as the SDR calculated based on the power amount for sale and the total power amount purchased is higher.

The compensation price for the second DR resource may be calculated at a price equal to or higher than the general compensation price. Herein, the compensation price for the second DR resource may be calculated at a price closer to the general penalty price as the SDR calculated based on the power amount for sale and the total power amount purchased is lower.

The at least one instruction may further include: an instruction to pay a compensation cost according to the compensation price to the second DR resource when the second DR resource fulfills a demand response for the power amount purchased from the first DR resource; and an instruction to impose a penalty cost according to the penalty price on the first DR resource.

The VPP operating device 100 may also further include an input interface device 140, an output interface device 150, a storage device 160, and the like. Each of the components included in VPP operating device 100 may be connected by a bus 170 to communicate with each other.

Herein, the processor 110 may refer to a Central Processing Unit (CPU), a Graphics Processing Unit (GPU), or a dedicated processor on which the methods according to the exemplary embodiments of the present invention are performed. The memory (or storage device) may include at least one of a volatile storage medium and a non-volatile storage medium. For example, the memory may be formed of at least one of Read Only Memory (ROM) and Random Access Memory (RAM).

The operation of the method according to the exemplary embodiment of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method operation or feature of a method operation. Similarly, aspects described in the context of a method may also represent a feature of a corresponding block or item or a corresponding apparatus. Some or all of the method operations may be performed by (or using) a hardware device, such as, for example, a microprocessor, a programmable computer, or an electronic circuit. In some exemplary embodiments, one or more of the most important method operations may be performed by such an apparatus.

While the present invention has been described above with reference to the preferred exemplary embodiments of the invention, it will be understood by those skilled in the art that various modifications and changes may be made to the invention without departing from the spirit and scope of the invention as described in the following patent claims.

**Claims**

1. A Virtual Power Plant operating device configured in a Virtual Power Plant system associated with a plurality of Demand Response resources, the Virtual Power Plant operating device comprising:

   at least one processor; and
   a memory for storing at least one instruction executed via the at least one processor,
   wherein the at least one instruction includes:

   an instruction to allocate a power reduction amount to each of the Demand Response resources in response to a power reduction request;
   an instruction to, when a request to sell at least a portion of the allocated power reduction amount is received from a first Demand Response resource among the Demand Response resources, provide information about power for sale to the remaining Demand Response resources; and
   an instruction to, when one or more second Demand Response resources that purchased the power for sale are decided, calculate, based on a result of the sale, a power transaction price that includes at least one of a penalty price for the first Demand Response resource and a compensation price for the second Demand Response resource.

2. The Virtual Power Plant operating device of claim 1,
   wherein the instruction to provide the information about the power for sale to the remaining Demand Response resources includes an instruction to terminate a sale process and deciding the second Demand Response resource when a predetermined time has elapsed, or when all of a power amount for sale has been sold.

3. The Virtual Power Plant operating device of claim 1,
   wherein the instruction to calculate the power transaction price includes:

   an instruction to calculate a Supply-Demand Ratio based on a power amount for sale and a total power amount purchased by the second Demand Response resource; and
   an instruction to calculate one or more of a penalty price for the first Demand Response resource and a compensation price for the second Demand Response resource based on the Supply-Demand Ratio.

4. The Virtual Power Plant operating device of claim 3,
   wherein the penalty price for the first Demand Response resource is calculated at a lower price as the Supply-Demand Ratio is higher.

**5.** The Virtual Power Plant operating device of claim 3,
wherein the compensation price for the second Demand Response resource is calculated at a higher price as the Supply-Demand Ratio is lower.

**6.** The Virtual Power Plant operating device of claim 1,
wherein the at least one instruction further includes:

an instruction to pay a compensation cost according to a predefined general compensation price when a Demand Response resource fulfills a demand response and reduces a power amount allocated to that Demand Response resource itself; and
an instruction to impose a penalty cost according to a general penalty price predefined at a price higher than the general compensation price when a Demand Response resource fails to reduce at least a portion of the power amount allocated to that Demand Response resource itself.

**7.** The Virtual Power Plant operating device of claim 6,
wherein the penalty price for the first Demand Response resource is calculated at a price equal to or lower than the general penalty price.

**8.** The Virtual Power Plant operating device of claim 7,
wherein the penalty price for the first Demand Response resource is calculated at a price closer to the general compensation price as an Supply-Demand Ratio calculated based on a power amount for sale and a total power amount purchased is higher.

**9.** The Virtual Power Plant operating device of claim 6,
wherein the compensation price for the second Demand Response resource is calculated at a price equal to or higher than the general compensation price.

**10.** The Virtual Power Plant operating device of claim 9,
wherein the compensation price for the second Demand Response resource is calculated at a price closer to the general penalty price as an Supply-Demand Ratio calculated based on a power amount for sale and a total power amount purchased is lower.

**11.** The Virtual Power Plant operating device of claim 1, wherein the at least one instruction further includes:

an instruction to, when the second Demand Response resource fulfills a demand response for a power amount purchased from the first Demand Response resource, pay a compensation cost according to the compensation price to the second Demand Response resource; and
an instruction to impose a penalty cost according to the penalty price on the first Demand Response resource.

**12.** A Virtual Power Plant operating method by a Virtual Power Plant operating device associated with a plurality of Demand Response resources, the Virtual Power Plant operating method comprising:

allocating a power reduction amount to each of the Demand Response resources in response to a power reduction request;
providing, when a request to sell at least a portion of the allocated power reduction amount is received from a first Demand Response resource among the Demand Response resources, information about power for sale to the remaining Demand Response resources; and
calculating, when one or more second Demand Response resources that purchased the power for sale are decided, based on a result of the sale, a power transaction price that includes at least one of a penalty price for the first Demand Response resource and a compensation price for the second Demand Response resource.

**13.** The Virtual Power Plant operating method of claim 12,
wherein the providing of the information about the power for sale to the remaining Demand Response resources includes terminating a sale process and deciding the second Demand Response resource when a predetermined time has elapsed, or when all of a power amount for sale has been sold.

**14.** The Virtual Power Plant operating method of claim 12,
wherein the calculating of the power transaction price includes:

calculating a Supply-Demand Ratio based on a power amount for sale and a total power amount purchased by the second Demand Response resource; and

calculating one or more of a penalty price for the first Demand Response resource and a compensation price for the second Demand Response resource based on the Supply-Demand Ratio.

15. The Virtual Power Plant operating method of claim 14,
wherein the penalty price for the first Demand Response resource is calculated at a lower price as the Supply-Demand Ratio is higher.

16. The Virtual Power Plant operating method of claim 14,
wherein the compensation price for the second Demand Response resource is calculated at a higher price as the Supply-Demand Ratio is lower.

17. The Virtual Power Plant operating method of claim 12, further comprising:

paying a compensation cost according to a predefined general compensation price when a Demand Response resource fulfills a demand response and reduces a power amount allocated to that Demand Response resource itself; and

imposing a penalty cost according to a general penalty price predefined at a price higher than the general compensation price when a Demand Response resource fails to reduce at least a portion of the power amount allocated to that Demand Response resource itself.

18. The Virtual Power Plant operating method of claim 17,
wherein the penalty price for the first Demand Response resource is calculated at a price equal to or lower than the general penalty price.

19. The Virtual Power Plant operating method of claim 18,
wherein the penalty price for the first Demand Response resource is calculated at a price closer to the general compensation price as an Supply-Demand Ratio calculated based on a power amount for sale and a total power amount purchased is higher.

20. The Virtual Power Plant operating method of claim 17,
wherein the compensation price for the second Demand Response resource is calculated at a price equal to or higher than the general compensation price.

21. The Virtual Power Plant operating method of claim 20,
wherein the compensation price for the second Demand Response resource is calculated at a price closer to the general penalty price as an Supply-Demand Ratio calculated based on a power amount for sale and a total power amount purchased is lower.

22. The Virtual Power Plant operating method of claim 12, further comprising:

when the second Demand Response resource fulfills a demand response for a power amount purchased from the first Demand Response resource, paying a compensation cost according to the compensation price to the second Demand Response resource; and

imposing a penalty cost according to the penalty price on the first Demand Response resource.

[FIGURE 1]

[FIGURE 2]

[FIGURE 3]

[FIGURE 4]

start

receive power reduction request — S410

allocate power reduction amount for each of DR resources — S420

receive request to sell from first DR resource — S430

provide information about power for sale to remaining DR resources — S440

S450 — Complete Power transaction? — NO

YES

calculate power transaction price — S460

end

[FIGURE 5]

[FIGURE 6]

## INTERNATIONAL SEARCH REPORT

| International application No. |
|---|
| **PCT/KR2024/010137** |

### A. CLASSIFICATION OF SUBJECT MATTER

**G06Q 50/06**(2012.01)i; **G06Q 50/26**(2012.01)i; **H02J 3/14**(2006.01)i; **H02J 3/00**(2006.01)i

According to International Patent Classification (IPC) or to both national classification and IPC

### B. FIELDS SEARCHED

Minimum documentation searched (classification system followed by classification symbols)

G06Q 50/06(2012.01); G06Q 10/04(2012.01); G06Q 10/06(2012.01); G06Q 30/06(2012.01); G06Q 50/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 수요 반응(DR, demand response), 자원(resources), 가상 발전소(VPP, virtual power plant), 전력(electric power), 감축량(reduction), 판매(sale), 가격(price), 페널티(penalty), 보상(incentive)

### C. DOCUMENTS CONSIDERED TO BE RELEVANT

| Category* | Citation of document, with indication, where appropriate, of the relevant passages | Relevant to claim No. |
|---|---|---|
| Y | KR 10-2021-0130983 A (KOREA ELECTRIC POWER CORPORATION et al.) 02 November 2021 (2021-11-02)<br>See claims 1-9 and figures 1 and 5. | 1,12 |
| A | | 2-11,13-22 |
| Y | KR 10-2020-0009533 A (KT CORPORATION) 30 January 2020 (2020-01-30)<br>See paragraphs [0056]-[0071], claims 1, 4, 8-11 and 13 and figures 1-5c. | 1,12 |
| A | JP 2010-140242 A (MITSUBISHI ELECTRIC CORP.) 24 June 2010 (2010-06-24)<br>See claims 1-4 and figures 1-3 and 12. | 1-22 |
| A | JP 6946207 B2 (HITACHI LTD.) 06 October 2021 (2021-10-06)<br>See claims 1 and 4. | 1-22 |
| A | KR 10-2108678 B1 (KOREA ELECTRONICS TECHNOLOGY INSTITUTE) 07 May 2020 (2020-05-07)<br>See claim 1. | 1-22 |

| ☐ Further documents are listed in the continuation of Box C. | ☑ See patent family annex. |
|---|---|

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 November 2024** | **06 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/010137**

| Patent document cited in search report | | | Publication date (day/month/year) | Patent family member(s) | | | Publication date (day/month/year) |
|---|---|---|---|---|---|---|---|
| KR | 10-2021-0130983 | A | 02 November 2021 | KR | 10-2502818 | B1 | 24 February 2023 |
| KR | 10-2020-0009533 | A | 30 January 2020 | KR | 10-2080304 | B1 | 21 February 2020 |
| JP | 2010-140242 | A | 24 June 2010 | JP | 5171592 | B2 | 27 March 2013 |
| JP | 6946207 | B2 | 06 October 2021 | JP | 2019-139495 | A | 22 August 2019 |
| KR | 10-2108678 | B1 | 07 May 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230113266